# EUROPEAN PATENT APPLICATION

(11) **EP 2 501 138 A2**
(43) Date of publication of application: **19.09.2012**
(21) Application number: 12156328.2
(22) Date of filing: 21.02.2012
(51) Int. Cl.: H04N 13/04

(54) **3D image display apparatus, 3D glasses, and driving method thereof**

(30) Priority: 16.03.2011 KR 20110023421; 29.09.2011 KR 20110099306
(71) Applicant: Samsung Electronics Co., Ltd., Suwon-si, Gyeonggi-do, 443-742 (KR)
(72) Inventor: Hur, Gil-tae, Gyeonggi-do (KR); Cho, Kun-ho, Gyeonggi-do (KR); Seo, Jeong-phil, Gyeonggi-do (KR); Kwon, Yong-hun, Gyeonggi-do (KR); Lee, Kye-hoon, Gyeonggi-do (KR); Choi, Suk-ju, Jeollabuk-do (KR); Lee, Young-min, Gyeonggi-do (KR)
(74) Representative: Clark, David James

(57) **Abstract**

A display apparatus is provided. The display apparatus includes a display panel which alternately displays a left-eye image and a right-eye image, a backlight unit which includes a plurality of different types of light sources and which is disposed on a rear surface of the display panel to emit light toward the display panel, a driving unit which drives the backlight unit, and a control unit which controls the different types of light sources to be used to display the left-eye image and the right-eye image, respectively.

## Description

### BACKGROUND

### 1. Field

Methods and apparatuses consistent with exemplary embodiments relate to a display apparatus, 3D glasses, and a driving method thereof, and more particularly, to a display apparatus using a backlight unit, 3D glasses, and a driving method thereof.

### 2. Description of the Related Art

Recently, a Liquid Crystal Display (LCD) has been widely used as an information display element in various areas from a screen for a small-scale mobile phone to a large-scale LCD television. Being a non-luminous element, an LCD needs to have a backlight to perform its display function.

A backlight for an LCD needs to have consistent brightness, and in the case of a mobile LCD, a backlight should be thin and light. In addition, a mobile LCD should be capable of realizing low power consumption. A currently-used LCD backlight includes, for example, a light emitting diode (LED), an Electro Luminescent Device (EL), a Cold Cathode Fluorescent Lamp (CCFL), an External Electrode Fluorescent Lamp (EEFL), a Flat Lamp (Flat Lamp), etc.

Among the above, an LED has been attracting much attention as an LCD backlight light source since it consumes less power than a CCFL and has a longer life expectancy than an EL. In addition, an LED has the advantage of preventing environmental contamination caused by mercury which is a main component of a fluorescent lamp and which has become a serious issue recently.

In a related art, a module, in which a single LED package (PKG) is arranged in a bar or in a row, is provided as a backlight. A conventional PKG generally uses a white LED since it displays only a single color.

However, if a single LED package is used, color reproducibility is only 79% in comparison with an NTSC color gamut.

In addition, the color reproducibility, effectiveness, and white coordinates of a panel may be affected by matching between a peak wave of R, G, B of a white LED and a peak wave of a color filter of an LCD liquid crystal.

Furthermore, a standard RGB color space (sRGB) matching ratio plays an important role in display quality. Therefore, to improve the display quality, further research was required with respect to the sRGB matching ratio.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

One or more exemplary embodiments provide a display apparatus using a plurality of light sources of different types as a backlight unit, 3D glasses, and a driving method thereof.

According to an aspect of the present invention, there is provided a display apparatus including a display panel which alternately displays a left-eye image and a right-eye image, a backlight unit which includes a plurality of different types of light sources and which is disposed on a rear surface of the display panel to emit light toward the display panel, a driving unit which drives the backlight unit, and a control unit which controls the different types of light sources to be used to display the left-eye image and the right-eye image, respectively.

The backlight unit may further include a light guide plate which diffuses light emitted from a backlight source toward an upper surface of the light guide plate, and the backlight unit may include a plurality of first-type light sources and a plurality of second-type light sources, and the first-type light sources and the second-type light sources may be alternately disposed in one area on the light guide plate.

The backlight unit may further include a light guide plate which diffuses light emitted from the backlight source toward a top surface of the light guide plate. The backlight unit may include a first backlight source including a plurality of first-type light sources and a second backlight source including a plurality of second-type light sources. The first backlight source and the second backlight source may be disposed in first and second areas on the light guide plate, respectively, and the first and second backlight sources may be spaced apart.

The different types of light sources may include a plurality of LEDs using a quantum dot (QD) fluorescent material and having different peak wavelengths. The control unit may control the different types of light sources to be alternately driven to display the left-eye image and the right-eye image, respectively.

The different types of light sources may include a plurality of LEDs having different wavelength bands that do not overlap, and the control unit may control the different types of light sources to be alternately or simultaneously driven and thus to be used to display the left-eye image and the right-eye image, respectively.

The LEDs having the different non-overlapping wavelength bands may include a first-type LED having at least two blue chips and a second-type LED having at least one blue chip and at least one red chip.

The first-type LED may further include a green fluorescent material and a red fluorescent material and the second-type LED may further include a green fluorescent material.

The control unit may generate a sync signal corresponding to an alternate driving of the backlight unit when displaying a 3D image and may provide the generated sync signal to external 3D glasses.

The control unit may control the different types of light sources to be simultaneously driven when displaying a 2D image.

According to another aspect, of one or more embodiments, 3D glasses are provided which operate in connection with a 3D display apparatus that displays a left-eye image and a right-eye image using a plurality of different types of light sources. The 3D glasses include a receiving unit which receives a sync signal from the 3D display apparatus, a glasses unit which includes a left-eye glass having a first-type color filter and a right-eye glass having a second-type color filter, a driving unit which drives the glasses unit, and a control unit which controls the driving unit in response to the sync signal. In addition, the first-type and the second-type color filters may correspond to the different types of light sources, respectively.

The different types of light sources may include a plurality of LEDs using a QD fluorescent material and having different peak wavelengths, and the first-type and the second-type color filters may be configured to respectively match with RGB peak wavelengths of the different types of light sources.

The different types of light sources may include a plurality of LEDs having different wavelength bands that do not overlap, and the first-type and second-type color filters may be configured to respectively match with wavelength bands of the different types of light sources.

The LEDs having the different non-overlapping wavelength bands may include a first-type LED having at least two blue chips, and a second-type LED having at least one blue chip and at least one red chip.

The first-type LED may further include a green fluorescent material and a red fluorescent material and the second-type LED may further include a green fluorescent material.

According to another aspect of one or more embodiments, a method is provided for driving a display apparatus including a display panel and a backlight unit that includes a plurality of different types of light sources and that is disposed on a rear surface of the display panel. The method includes emitting light toward the display panel by the backlight unit and driving the backlight unit such that the different types of light sources can be used to display the left-eye image and the right-eye image, respectively.

The display apparatus may further include a light guide plate which diffuses light emitted from the backlight unit toward an upper surface of the light guide plate, and the backlight unit may include a plurality of first-type light sources and a plurality of second-type light sources. The first-type light sources and the second-type light sources may be alternately disposed in one area of the light guide plate.

The display apparatus may further include a light guide plate which diffuses light emitted from the backlight unit toward a top surface of the light guide plate, and the backlight unit may include a first backlight source including a plurality of first-type light sources, and a second backlight source including a plurality of second-type light sources. The first backlight source and the second backlight source may be disposed in first and second areas, respectively, on the light guide plate and may be spaced apart.

The different types of light sources may include a plurality of LEDs using a QD fluorescent material and having different peak wavelengths, and the driving may include controlling the different types of light sources to be alternately driven and thus to be used to display the left-eye image and the right-eye image, respectively.

The different types of light sources may include a plurality of LEDs having different wavelength bands that do not overlap, and the driving may include controlling the different types of light sources to be alternately or simultaneously driven and thus to be used to display the left-eye image and the right-eye image, respectively.

The LEDs having the different non-overlapping wavelength bands may include a first-type LED having at least two blue chips and a second-type LED having at least one blue chip and at least one red chip.

The first-type LED may further include a green fluorescent material and a red fluorescent material and the second-type LED may further include a green fluorescent material.

The method may further include generating a sync signal corresponding to an alternate driving of the backlight unit when displaying a 3D image and providing the generated sync signal to external 3D glasses.

The method may further include driving the different types of light sources simultaneously when displaying a 2D image.

According to another aspect of one or more embodiments, a method is provided for driving 3D glasses which operate in connection with a 3D display apparatus that displays a left-eye image and a right-eye image using a plurality of different types of light sources. The method includes receiving a sync signal from the 3D display apparatus, and driving a glasses unit which includes a left-eye glass having a first-type color filter and a right-eye glass having a second-type color filter. In addition, the first-type and the second-type color filters correspond to the different types of light sources, respectively.

The different types of light sources may include a plurality of LEDs with a QD fluorescent material and having different peak wavelengths, and the first-type and the second-type color filters may be configured to respectively match with RGB peak wavelengths of the different types of light sources.

The different types of light sources may include a plurality of LEDs having different wavelength bands that do not overlap, and the first-type and second-type color filter may be configured to respectively match with wavelength bands of the different types of light sources.

The LEDs having the different non-overlapping wavelength bands may include a first-type LED having at least two blue chips and a second-type LED having at least one blue chip and at least one red chip.

The first-type LED may further include a green fluorescent material and a red fluorescent material and the second-type LED may further include a green fluorescent material.

Accordingly, the methods and apparatuses of the exemplary embodiments may display a much wider range of color gamut than a display panel using a conventional LED light source. In addition, a matching rate with an LCD liquid color filter may be enhanced due to a narrow full width at half maximum (FWHM) and thus, light efficiency can be improved.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become more apparent by describing in detail exemplary embodiments thereof with reference to the attached drawings in which:
FIG. 1 is a block diagram illustrating a configuration of a display apparatus according to an exemplary embodiment;
FIG. 2 is a sectional view for explaining a configuration of a display apparatus according to an exemplary embodiment;
FIGS. 3A to 3C are views illustrating configurations of an LED module according to various exemplary embodiments;
FIGS. 4A and 4B are views for explaining a property of a different type of LED according to various exemplary embodiment;
FIG. 5 is a view illustrating a 3D image providing system according to an exemplary embodiment;
FIG. 6A is a block diagram illustrating a configuration of 3D glasses according to an exemplary embodiment;
FIG. 6B is a view for explaining a property of 3D glasses according to an exemplary embodiment;
FIG. 6C is a view for explaining a configuration of 3D glasses according to another exemplary embodiment.
FIG. 7 is a graph for explaining a color gamut of a display apparatus according to an exemplary embodiment;
FIGS. 8A to 8C are graphs for explaining a color gamut of a display apparatus according to another exemplary embodiment.
FIG. 9 is a flowchart for explaining a method for driving a display apparatus according to an exemplary embodiment.
FIG. 10 is a flowchart for explaining a method for driving 3D glasses according to an exemplary embodiment.

### DETAILED DESCRIPTION OF EXEMPLARY EMBODIMENTS OF THE INVENTION

Certain exemplary embodiments will now be described in higher detail with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the application with unnecessary detail.

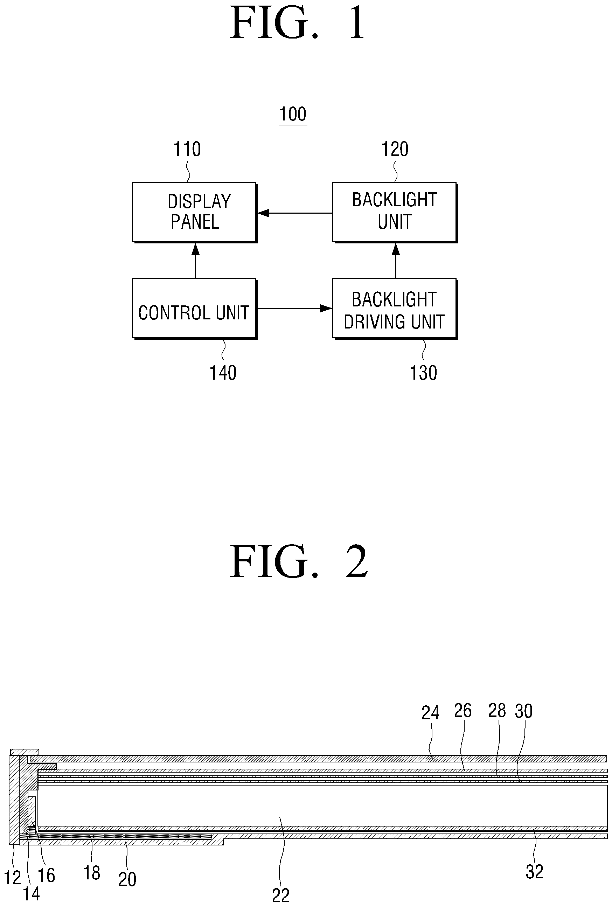

FIG. 1 is a block diagram illustrating a configuration of a three-dimensional display apparatus according to an exemplary embodiment.

According to FIG. 1, the display apparatus 100 includes a display panel 110, a backlight unit 120, a backlight driving unit 130 and a control unit 140.

The display panel 110 displays an image, and in particular, the display panel 110 may alternately display a left-eye image and a right-eye image to display a 3D image. Herein, the display panel 110 may be embodied as various color liquid crystals. For example, the display panel 110 may be embodied as an LCD. Herein, the LCD is a display device which uses the properties of a liquid crystal in which an arrangement of molecules is changed when a voltage is applied. The LCD displays a text or an image using a change in an optical refraction which occurs when the arrangement of each liquid molecule is changed by electric pressure applied through a transparent electrode after a liquid is injected into a narrow space between two glass substrates. The operation of an LCD is known in the art. Therefore, a detailed description of the operation of an LCD will not be provided.

The backlight unit 120 is disposed on the back of the display panel 110 and may provide light to the display panel 110.

Specifically, the backlight unit 120 may comprise a light guide plate (not shown) and a light source (not shown).

The light guide plate (not shown) receives light from the light source (not shown) and distributes the light to the entire upper surface of the light guide plate. In some cases, a reflection layer (not shown) may be provided on the lower surface of the light guide plate (not shown) so as to guide light only to the upper surface of the light guide plate.

The light source (not shown) provides light to the light guide plate (not shown) and may be embodied as a plurality of Light Emitting Diodes (LEDs). An LED is a light emitting element which uses a light emitting effect (electric field luminescence) that occurs when voltage is applied to a semiconductor. The material suitable for an LED is a material, an emission wavelength of which exists in a visible range or in a near infrared range, which has high emission efficiency, and which is capable of forming a p-n junction.

Such a material may include a compound semiconductor such as GaN, GaAs, GaP, GaAsl-x Px, Gal-xAlxAs, InP, and Inl-xGaxP.

An optical film (not shown) re-reflects light reflected from the backlight source (not shown). Accordingly, brightness degradation may be prevented.

Various optical films such as diffusion, prism, and Dual Brightness Enhancement Film (DBEF) may be used as the optical film (not shown).

As described above, a general LED may be used as the light source, but in some cases, a Cold Cathode Fluorescent Lamp (CCFL), an External Electrode Fluorescent Lamp (EEFL), etc., may also be used as a light source.

The backlight unit 120 may include different types of LED light sources.

Herein, the different types of LEDs may be LEDs of an LED package using fluorescent materials having different RGB peak wavelengths. A QD fluorescent material may be used as a fluorescent material.

In general, a white LED emitting a white color may be obtained by painting a fluorescent material on a blue LED chip or a UV LED chip, or by combining LED chips emitting two or three different colors using a multi-chip.

For example, a blue LED chip may be used to realize a LED packages having different peak wavelengths by adjusting the amount of the fluorescent material, the size of an LED chip, etc.

The optical design of LED packages having different peak wavelengths is apparent to those skilled in the related art and thus, a detailed description will not be provided.

The different types of LEDs may be LED packages with different wavelengths, and particularly, with different wavelength bands that do not overlap. The fluorescent material is not limited to a QD fluorescent material. In another non-limiting exemplary embodiment, a typical fluorescent material may be used.

Herein, the different types of LEDs with different non-overlapping wavelength bands may be realized by combining a plurality of LED chips. For example, an A-type LED including two blue chips, and a B-type LED including a blue chip and a red chip may be realized.

In this exemplary embodiment, the A-type LED may also include green and red fluorescent materials, and the B-type LED may also include another blue chip and another red chip. Accordingly, white balance may be adjusted by combining the three blue chips and a red chip. The structures of the A- and B-type LEDs will be described later in further detail.

The backlight driving unit 130 drives the backlight unit 120 under the control of the control unit 140 which will be explained later.

The control unit 140 may control the backlight driving unit 130 to simultaneously drive different types of light sources constituting the backlight unit 120 or to alternately drive each of the different types of light sources.

In a case in which the backlight unit 120 includes an LED package including different types of light sources with fluorescent materials having different RGB peak wavelengths, the control unit 140 may control the different types of light sources to be alternately driven when displaying a 3D image. That is, the control unit 140 may control the backlight driving unit 130 to alternately drive the different types of light sources of the backlight unit 120 depending on whether it is time to display a left-eye image or a right-eye image during the realization of a 3D image.

The control unit 140 may control the different types of light sources to be simultaneously driven at the same time during the realization of a 2D image.

The control unit 140 may generate a sync signal corresponding to an alternate driving of the backlight unit 120 during the realization of a 3D image and may provide the generated sync signal to external 3D glasses.

In one exemplary embodiment, in a case in which the different types of light sources include an A-type LED and a B-type LED, the control unit 140 may generate a sync signal for matching the RGB wavelengths of the A-type LED and the B-type LED with the left- and right-eye glasses of a pair of 3D glasses, and may provide the generated sync signal to the 3D glasses.

In another exemplary embodiment, in a case in which the backlight unit 120 is an LED package including different types of light sources with different non-overlapping wavelength bands during an active-type realization of a 3D image, the control unit 140 may control the different types of light sources to be driven alternately or simultaneously.

More specifically, in the case of the active-type realization of a 3D image, the control unit 140 may control the different types of light sources to be alternately driven. In this case, the control unit 140 may generate a sync signal corresponding to an alternate driving of the backlight unit 120 and may provide the generated sync signal to external 3D glasses.

On the other hand, in the case of a passive-type realization of a 3D image, the control unit 140 may control the different types of light sources to be driven simultaneously. In this case, the control unit 140 may not necessarily transmit a sync signal to the external 3D glasses.

FIG. 2 is a sectional view for explaining a configuration of a display apparatus according to an exemplary embodiment.

In general, an LCD backlight can be implemented as a direct-type and as an edge-type backlight depending on a location of a light source. A direct-type backlight may have consistent brightness as it has a light source underneath an LCD cell, a diffusion plate on the front side of the light source, and a reflection plate on the back of the light source to reflect and diffuse light emitted from the light source. Since there should be a certain distance between the light source and the diffusion plate to obtain desired brightness uniformity, the options for manufacturing a thin backlight are limited. Therefore, the following exemplary embodiments will be described based on an edge-type backlight.

The LED backlight illustrated in FIG. 2 is an edge-type backlight that has an LED module 16, that is, a light source, on a side section of a light guide plate 22 to reflect and diffuse light on one side of the light guide plate 22 so as to project a surface light source obtained through multiple reflection on an LCD cell. Since the light source 16 is attached to the side of the light guide plate 22, it is possible to make a thin backlight and to improve brightness uniformity according to a design of an optical reflection surface.

The LED module 16 provides light by projecting a surface light obtained by performing multiple reflection of the light on one side of the light guide plate 22 of an LCD panel cell.

The light guide plate 22 uniformly transfers light emitted from the LED module 16 to the front side of an LCD. A prism light guided panel (LGP) and a lenticular LGP may be used as the light guide plate 22.

The reflection layer 32 changes a direction of light reflected from the LED module 16 towards a diffusion film 30.

The reflection layer 32 concentrates light on an LCD cell and prevents loss of light. Materials such as polyethylene (PE) or polyethylene terephthalate resin (PET) may be used as a material for the reflection layer 32.

The optical films 26, 28, 30 are located on the side of the LCD glasses 24 of the light guide plate 22. These films improve brightness uniformity of a backlight by diffusing and scattering light entered through the light guide plate 22. Various optical films such as the diffusion film 30, the prism film 28, and the DBEF 26 may be used. All of the optical films may be used as shown in FIG. 2. However, it is also possible that only one or at least one of them may be used in some cases.

According to the exemplary embodiment which uses an LED as an LCD backlight light source as described above, the LED module 16 may be disposed on an edge of the backlight unit to transfer light to a center through a total reflection in the light guide plate 22, and a surface light source may be embodied as light which is projected on the front side through a pattern of the light guide plate 22. The light projected forward breaking reflection by a pattern of the light guide plate 22 goes through light miscibility and re-reflection as it penetrates through an optical sheet, serving as a backlight of the LCD glasses 24.

In addition, a top chassis 12, a middle mold 14, an LED printed circuit board (PCB) 18, and a bottom chassis 20 may be further included. However, those components are not related to the technical feature of the present invention and are obvious to one skilled in the related art and thus, a detailed description will not be provided.

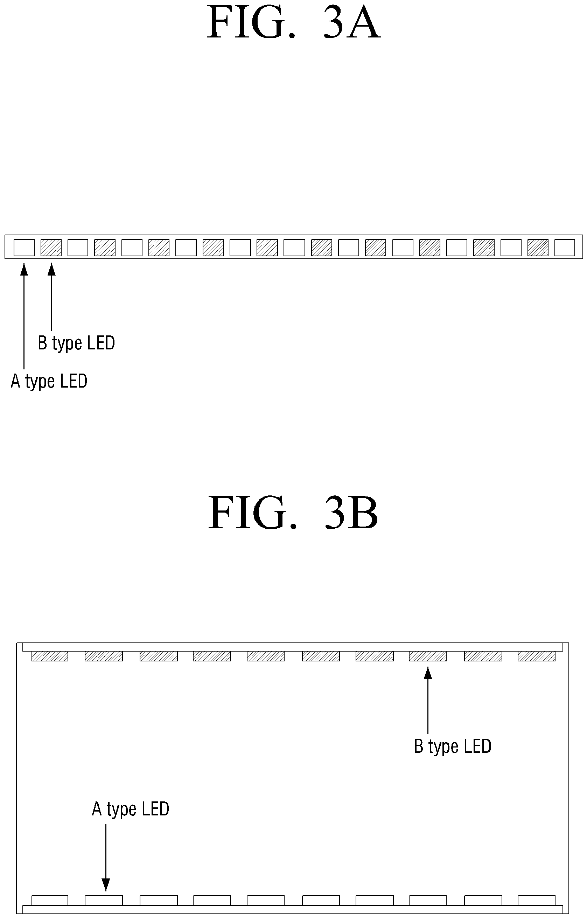

FIGS. 3A to 3C are views illustrating configurations of an LED module according to various exemplary embodiments.

As illustrated in FIG. 3A, a predetermined number of LEDs of different types (an A-type LED and a B-type LED) may be alternately disposed on an LED bar. In FIG. 3A, one A-type LED and one B-type LED are disposed alternately, but this is only an example. The A-type LEDs or the B-type LEDs may also be disposed alternately by two, three, or more than three units.

As an alternative, as illustrated in FIG. 3B, an A-type LED may be disposed on one side of a light guide plate and a B-type LED may be disposed on the other side of the light guide plate. In FIG. 3B, different types of LEDs are disposed on the upper and lower side of a light guide plate, but this is only an example. An A-type LED and a B-type LED may also be disposed in various ways, such as on the left and right side of a light guide plate.

Herein, the different types of LEDs may be LEDs having different peak wavelengths or may be LEDs having different wavelength bands which are not overlapping as described above.

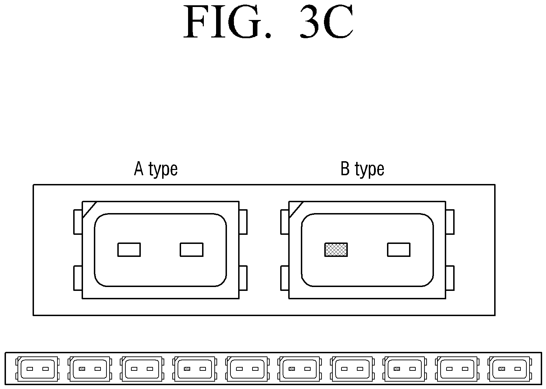

FIG. 3C is a view illustrating another alternative of a configuration of an LED package.

Referring to FIG. 3C, an A-type LED may include two blue chips, and a B-type LED may include a blue chip and a red chip. That is, the A-type LED and the B-type LED may each include two chips.

The A-type LED may also include a green fluorescent material and a red fluorescent material, and the B-type LED may also include a green fluorescent material.

Together, the A-type LED and the B-type LED may adjust white balance, and may constitute an LED module, as shown in FIG. 3C.

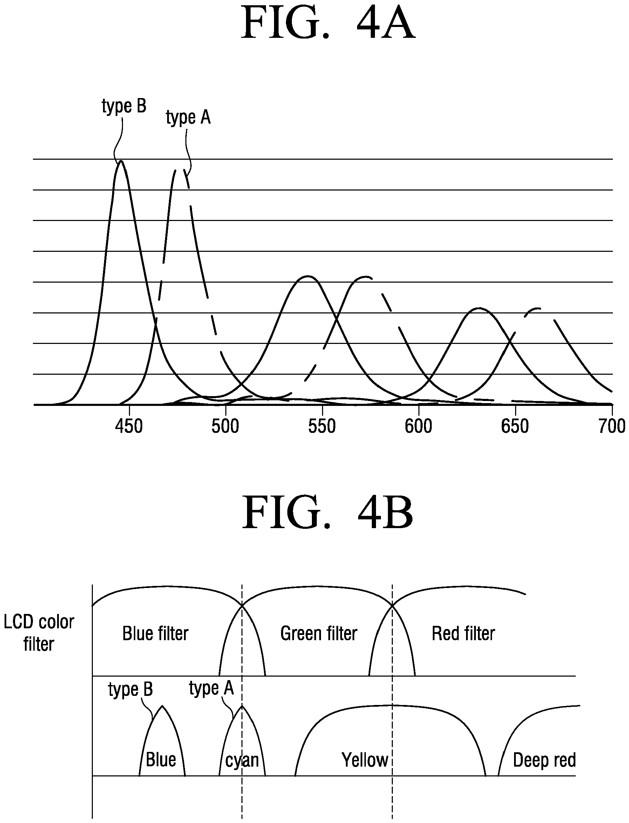

FIG. 4A is a view for explaining a property of a different type of LED according to an exemplary embodiment.

As illustrated in FIG. 4A, different types of LEDs may be embodied to have different peak wavelengths in RGB through various combinations between a blue chip and fluorescent material constituting an LED as described above.

FIG. 4B is a view for explaining a property of a different type of LED according to another exemplary embodiment.

Different types of LEDs may be LEDs having different wavelengths, as shown in FIG. 4B.

Referring to FIG. 4B, an A-type LED may have a blue wavelength band and a yellow wavelength band, and a B-type LED may have a cyan wavelength band and a deep red wavelength band. That is, the A-type LED and the B-type LED may have different wavelength bands.

The above-mentioned wavelength bands of each of the A-type LED and the B-type LED are merely provided by way of example. That is, each of the A-type LED and the B-type LED may be configured to have various wavelength bands, other than those set forth herein, as long as the various wavelength bands do not overlap.

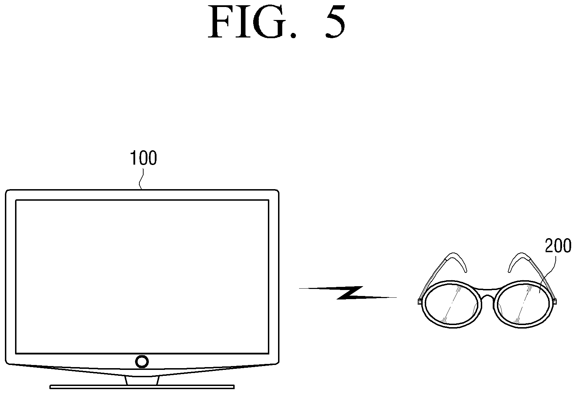

FIG. 5 is a view illustrating a 3D image providing system according to an exemplary embodiment. As illustrated in FIG. 5, the 3D image providing system includes a display apparatus 100 for displaying a 3D image on a screen and 3D glasses 200 for watching a 3D image.

The display apparatus 100 may be embodied to display a 3D image or both, a 2D image and a 3D image, and may have the configuration illustrated in FIG. 1. Herein, the display apparatus 100 may be embodied, for example, as a 3D TV. The display apparatus 100 may be any apparatus capable of displaying a 3D image such as a 3D monitor and a 3D image projector.

When displaying a 2D image, the display apparatus 100 may use the same method as that of a conventional 2D display apparatus, and when displaying a 3D image, it may receive a 3D image outputted from a photographing device, such as a camera or the like, or a 3D image sent from a broadcasting station after being photographed by a camera and then being edited/processed at the broadcasting station. The display apparatus may process the received image, and then display the processed image on a screen. Particularly, the display apparatus 100 may process left and right-eye images while referring to a format of the 3D image, and may display the processed left and right-eye images alternately in a time-sharing manner.

The 3D glasses 200 may be embodied as active-type shutter glasses and as passive-type polarizing glasses. In this case, color filters corresponding to the wavelength bands of A-type and B-type LEDs may be attached to left- and right-eye glasses of the 3D glasses 200.

When the 3D glasses 200 are embodied as passive-type glasses, a color filter that filters the wavelength bands of an A-type LED may be attached to the left-eye glass, and a color filter that filters the wavelength bands of a B-type LED may be attached to the right-eye glass. As a result, the left-eye and right-eye glasses may be embodied so as to filter wavelength bands that do not overlap. Accordingly, even if the A-type and B-type LEDs are driven at the same time, the left- and right-eye glasses may only filter their respective wavelength bands. As a result, a viewer may perceive a left-eye image and a right-eye image separately. In this manner, it is possible to realize 3D image.

The 3D glasses 200 may be embodied as a type which uses principles of active type shutter glasses and passive type shutter glasses simultaneously.

That is, the 3D glasses 200 may use the principle of passive-type polarizing glasses which separately receive a left-eye image and a right-eye image reproduced in the display apparatus 100 through a polarizing lens. By using this principle, the brain combines and recognizes a stereoscopic image. At the same time, the principle of active-type of shutter glasses may be used. When an image of a display apparatus is provided, left and right eyes of 3D glasses are synchronized to be turned on and off.

Specifically, the left-eye glass may be equipped with a color filter that filters the wavelength bands of an A-type LED and the right-eye glass may be equipped with a color filter which filters the wavelength bands of a B-type LED. As a result, the left-eye glass and the right-eye glass may be embodied so as to filter different wavelength bands, and may operate in the same manner as shutter glasses in response to the receipt of a sync signal from the display apparatus 100 for synchronizing the turning on or off of the left-eye glass and the right-eye glass.

Hereinafter, a configuration of 3D glasses according to an exemplary embodiment will be explained.

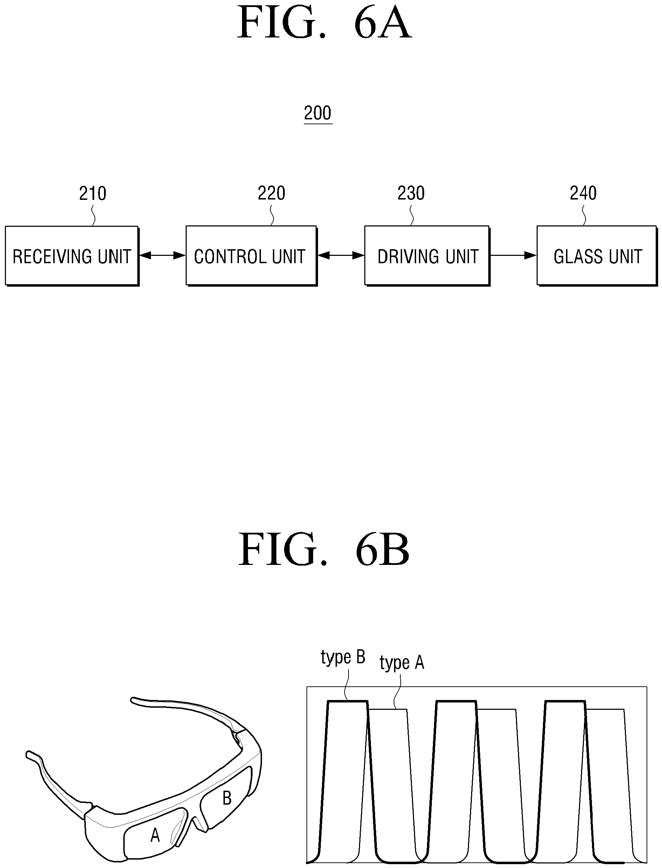

FIG. 6A is a block diagram illustrating a configuration of 3D glasses according to an exemplary embodiment.

Referring to FIG. 6A, the 3D glasses 200 comprises a receiving unit 210, a control unit 220, a driving unit 230, and a glasses unit 240.

The receiving unit 210 receives a sync signal related to a 3D image from the display apparatus 100 which is connected via a cable or wirelessly. For example, the display apparatus 100 radiates a sync signal using straight infrared rays having linearity and the receiving unit 210 may receive the sync signal from the radiated infrared rays.

For example, the sync signal transmitted from the display apparatus 100 to the receiving unit 210 may be a signal in which a high level and a low level are alternated at predetermined time intervals, and a left-eye image may be transmitted in a high level time and a right-eye image may be transmitted in a low level time.

The receiving unit 210 transmits a sync signal received from the display apparatus 100 to the control unit 220.

The control unit 220 controls overall operation of the 3D glasses 200. In particular, the control unit 220 controls the driving unit 230 to generate a control signal based on the sync signal received from the receiving unit 210 and to transmit the generated control signal to the glasses unit 240. That is, the control unit 220 controls the driving unit 230 to generate a driving signal to drive the glasses unit 240 based on the sync signal.

The driving unit 230 generates a driving signal to drive the glasses unit 240 and generates a driving signal to drive a left- or right-eye glass based on the sync signal received from the receiving unit 210.

As described above, the glasses unit 240 may include a left-eye glass and a right-eye glass. The glasses unit 240 may be controlled according to the driving signal received from the glasses unit 230.

Each of the left-eye glass and the right-eye glass may be embodied using a color filter that is configured to match with one of the different types of LEDs of the backlight unit 120 of the display apparatus 100.

For example, in a case in which the different types of LEDs are configured to have different RGB peak wavelengths, the color filters may be configured to match with the RGB peak wavelengths of the different types of LEDs.

In another example, in a case in which different types of LEDs are embodied to have different wavelength bands, the color filters may be embodied to match with the wavelength bands of the different types of LEDs.

Meanwhile, when displaying a 2D image, the display apparatus 100 may realize a panel with superior color gamut by alternately driving the different types of light source. For example, the display apparatus 100 may alternately drive an A-type LED and a B-type LED when operating a panel with a frequency of 240Hz. However, this feature is only one aspect of an exemplary embodiment, and an A-type LED and B-type LED may be driven simultaneously.

That is, when displaying a 3D image, the display apparatus 100 may synchronize an A-type LED with an A-type glass of the 3D glasses 200 and may synchronize a B-type LED with a B-type glass of the 3D glasses 200 according to left-eye and right-eye images displayed on a panel and alternately operate the synchronized images so as to realize a 3D image display in the same way as in a conventional shutter glasses method. Herein, the A-type glass represents left-eye glasses or right-eye glasses which are embodied using a color filter, the RGB wavelength of which matches with the A-type LED, and the B-type glass represents left-eye glasses or right-eye glasses which are embodied using a color filter, the RGB wavelength of which matches with the B-type LED.

For example, when the display apparatus 100 displays a 3D image, an A-type LED and a B-type LED may be driven at the same time, and the left-eye and right-eye glasses of the 3D glasses 200 may be configured to use a color filter for an A-type LED and a color filter for a B-type LED, respectively, or a color filter for a B-type LED and a color filter for an A-type LED, respectively, so as to filter different non-overlapping wavelength bands. In this manner, it is possible to realize a 3D image in the same manner as with passive-type glasses without requiring a sync signal.

FIG. 6B is a view for explaining a property of 3D glasses according to an exemplary embodiment.

As illustrated on the left side of FIG. 6B, the 3D glasses consist of an A-type glass and a B-type glass and each of the A-type and B-type glasses may comprise a color filter which matches with an RGB peak wavelength of an A-type LED and a B-type LED that is used as a light source of the display apparatus 100.

As illustrated on the right side of FIG. 6B, A-type glasses and B-type glasses are embodied to have different peak wavelengths.

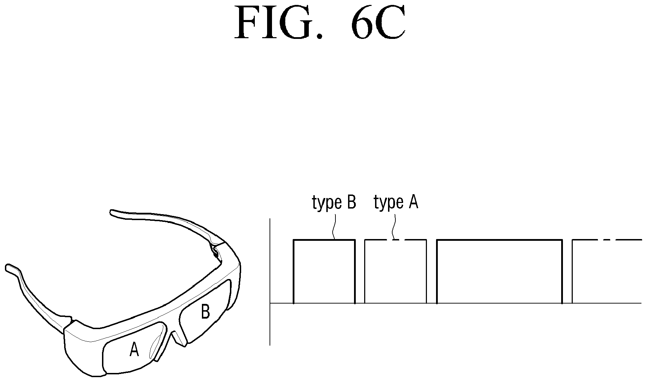

FIG. 6C is a view for explaining a property of 3D glasses according to another exemplary embodiment.

As illustrated on the left side of FIG. 6C, a pair of 3D glasses may include an A-type glass and a B-type glass, and each of the A-type and B-type glasses may include a color filter that corresponds to the wavelength bands of an A-type or B-type LED that is used as a light source of the display apparatus 100.

As illustrated on the right side of FIG. 6C, the A-type glass and the B-type glass may be embodied to filter different wavelength bands.

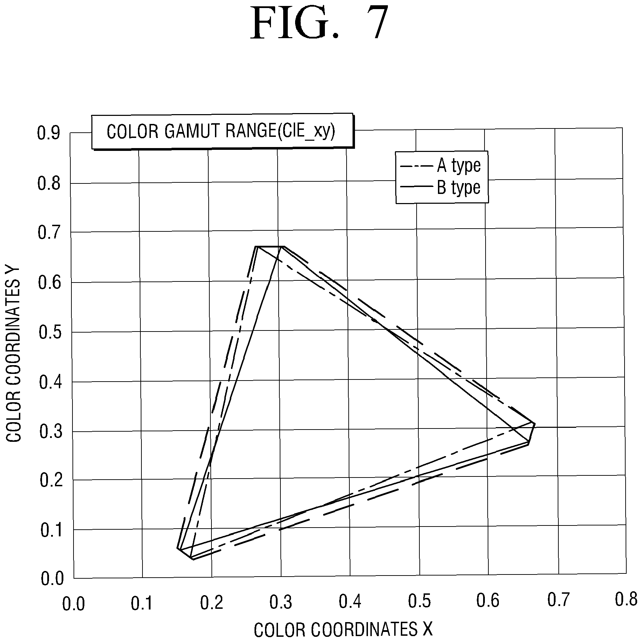

FIG. 7 is a graph for explaining color gamut ranges of a display apparatus according to an exemplary embodiment.

FIG. 7 illustrates an example of color gamut ranges of different types of LEDs with different peak wavelengths.

As illustrated in FIG. 7, the A-type LED and the B-type LED have different color gamut ranges and thus, the display apparatus 100 may display a color gamut range which cannot be displayed by only one type of LED.

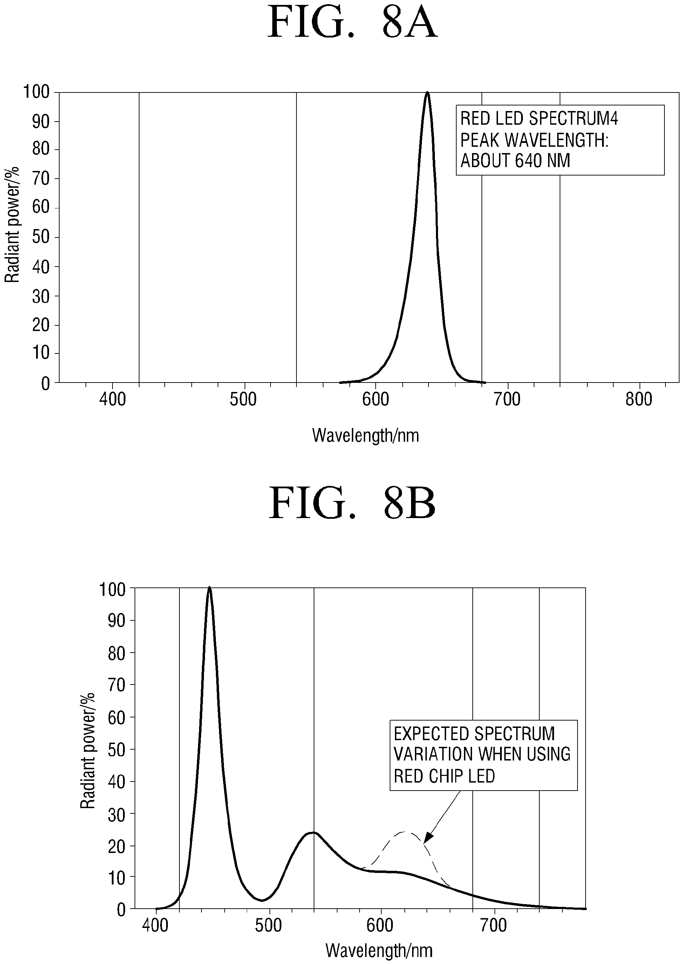

FIGS. 8A to 8C illustrate color gamut ranges of a display apparatus according to another exemplary embodiment.

More specifically, FIGS. 8A to 8C illustrate color gamut ranges of different types of LEDs with different wavelength bands.

FIG. 8A illustrates a spectrum graph of a red chip LED, and FIG. 8B illustrates a spectrum graph of a blue chip LED.

Referring to FIGS. 8A and 8B, the use of a red chip LED may improve the color representation for a red color, as compared to the use of a blue chip LED. Therefore, it is possible to offer a better color representation.

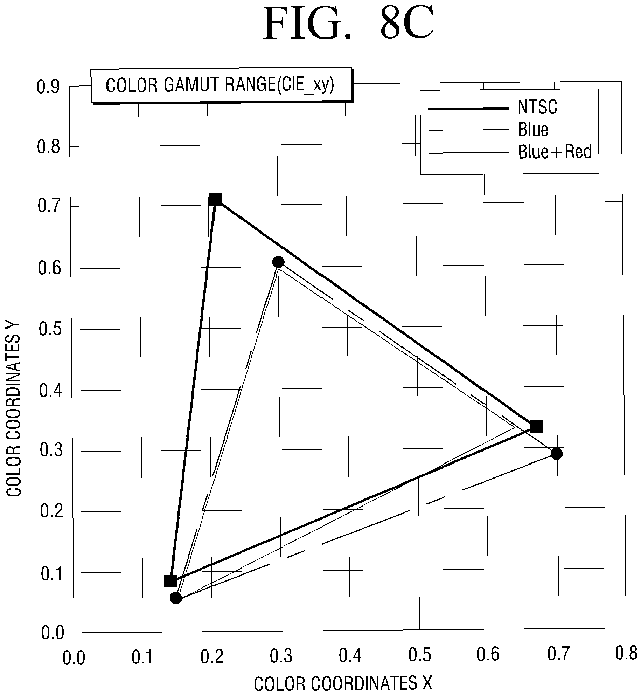

Referring to FIG. 8C, since the color representation for National Television System Committee (NTSC) colors or for a red color is also improved, it is possible to provide a wide color gamut, as compared to the use of an LED with a blue chip only.

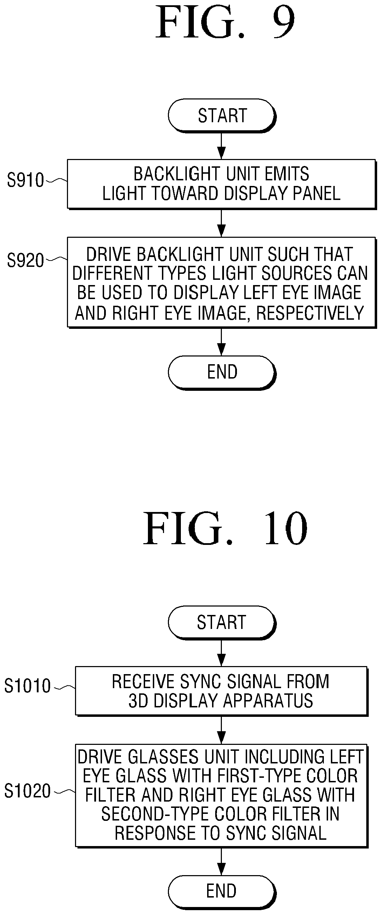

FIG. 9 is a flowchart for explaining a method for driving a display apparatus. The display apparatus includes a display panel and a backlight unit and the backlight unit includes a plurality of different types of light sources which are disposed at the rear of the display panel according to an exemplary embodiment of the present invention.

Referring to FIG. 9, the backlight unit may emit light toward the display panel (S910).

The backlight unit may be driven such that the plurality of different types of light sources may be used to display a left-eye image and a right-eye image, respectively (S920).

For example, the backlight unit may also include a light guide plate which diffuses light emitted from a backlight source toward the top surface of the light guide plate, and the backlight unit may include a plurality of first-type light sources and a plurality of second-type light sources. In this exemplary embodiment, the first-type light sources and the second-type light sources may be alternately disposed on one portion of the light guide plate.

In another exemplary embodiment, the backlight unit may also include a light guide plate which diffuses light emitted from the backlight source toward the top surface of the light guide plate, and the backlight unit may include a first backlight source including a plurality of first-type light sources and a second backlight source including a plurality of second-type light sources. In this exemplary embodiment, the first backlight source and the second backlight source may be disposed in first and second areas, respectively, on the light guide plate, and may be spaced apart.

The plurality of different types of light sources may be LEDs using a QD fluorescent material and having different peak wavelengths. In this case, S920 may be performed for alternately driving the plurality of different types of light sources so that they may be used to display the left-eye image and the right-eye image, respectively.

The plurality of different types of light sources may be LEDs having different wavelength bands that do not overlap. In this case, S920 may be performed for driving the plurality of different types of light sources at the same time or one after another so that they may be used to display the left-eye image and the right-eye image, respectively.

The LEDs having the different non-overlapping wavelength bands may include a first-type LED having at least two blue chips and a second-type LED having at least one blue chip and at least one red chip.

The first-type LED may also include a green fluorescent material and a red fluorescent material, and the second-type LED may also include a green fluorescent material.

The method illustrated in FIG. 9 may also include generating a sync signal corresponding to an alternate driving of the backlight unit while displaying a 3D image and providing the generated sync signal to external 3D glasses.

The method illustrated in FIG. 9 may also include driving the plurality of different types of light sources simultaneously for the display of a 2D image.

FIG. 10 is a flowchart for explaining a method for driving 3D glasses, which operate in connection with a 3D display apparatus that displays a left-eye image and a right-eye image using a plurality of different types of light sources according to an exemplary embodiment.

A sync signal may be received from the 3D display apparatus. (S1010)

A glasses unit including a left-eye glass having a first-type color filter and a right-eye glass having a second-type color filter may be driven in response to the sync signal (S1020). For example, the first-type color filter and the second-type color filter may correspond to the plurality of different types of light sources, respectively.

For example, the plurality of different types of light sources may be LEDs using a QD fluorescent material and having different peak wavelengths, and the first-type and the second-type color filters may be configured to match with the RGB peak wavelengths of the plurality of different types of light sources.

In this example, the plurality of different types of light sources may be LEDs having different wavelength bands that do not overlap, and the first-type color filter and the second-type color filter may be configured to match with the wavelength bands of the plurality of different types of light sources.

Here, the LEDs having the different non-overlapping wavelength bands may include a first-type LED having at least two blue chips and a second-type LED having at least one blue chip and at least one red chip.

The first-type LED may also include a green fluorescent material and a red fluorescent material, and the second-type LED may also include a green fluorescent material.

The exemplary embodiments of the present invention have been described, taking a non-emissive display device such as an LCD as an example. However, the present invention may also be applied directly, or similarly, to a self-emitting display device such as an organic light-emitting diode (OLED), a field emitting diode (FED), or the like.

As described above, according to the present invention, it is possible to realize a wider color gamut range than when using a display panel with an existing LED light source. In addition, since fluorescent materials generally have a small full width at half maximum (FWHM), it is possible to provide an excellent matching rate for an LCD color filter and to improve light efficiency.

In addition, it is possible to easily realize a passive 3D display panel by using an LED light source having different wavelength bands.

The processes, functions, methods, and/or software described herein may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules that are recorded, stored, or fixed in one or more computer-readable storage media, in order to perform the operations and methods described above, or vice versa. In addition, a computer-readable storage medium may be distributed among computer systems connected through a network and computer-readable codes or program instructions may be stored and executed in a decentralized manner.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternative, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display panel which alternately displays a left-eye image and a right-eye image;
a backlight unit which comprises a plurality of different types of light sources and which is disposed on a rear surface of the display panel to emit light toward the display panel;
a driving unit which drives the backlight unit; and
a control unit which controls the different types of light sources to display the left-eye image and the right-eye image, respectively.

2. The display apparatus as claimed in claim 1, wherein the backlight unit further comprises
a backlight source, and
a light guide plate which diffuses light emitted from the backlight source toward an upper surface of the light guide plate, and
wherein the backlight source comprises a plurality of first-type light sources and a plurality of second-type light sources, the first-type light sources and the second-type light sources being alternately disposed in one area on the light guide plate.

3. The display apparatus as claimed in claim 1, wherein the backlight unit comprises:
a first backlight source comprising a plurality of first-type light sources,
a second backlight source comprising a plurality of second-type light sources, and
a light guide plate which diffuses light emitted from the first backlight source and the second backlight source toward a top surface of the light guide plate,
wherein the first backlight source and the second backlight source are disposed in first and second areas, respectively, on the light guide plate, and
wherein the first backlight source and the second backlight source are spaced apart.

4. The display apparatus as claimed in claim 2 or 3, wherein the different types of light sources comprise a plurality of LEDs using a quantum dot (QD) fluorescent material and having different peak wavelengths, and
wherein the control unit controls the different types of light sources to be alternately driven to display the left-eye image and the right-eye image, respectively.

5. The display apparatus as claimed in claim 2 or 3, wherein the different types of light sources comprise a plurality of LEDs having different wavelength bands that do not overlap, and
wherein the control unit controls the different types of light sources to be alternately or simultaneously driven and thus to be used to display the left-eye image and the right-eye image, respectively.

6. The display apparatus as claimed in claim 5, wherein the plurality of LEDs having the different non-overlapping wavelength bands comprise a first-type LED having at least two blue chips and a second-type LED having at least one blue chip and at least one red chip.

7. The display apparatus as claimed in claim 6, wherein the first-type LED further comprises a green fluorescent material and a red fluorescent material, and
wherein the second-type LED further comprises a green fluorescent material.

8. The display apparatus as claimed in claim 4 or in claim 5, wherein the control unit generates a sync signal corresponding to an alternate driving of the backlight unit when displaying a 3D image and provides the generated sync signal to external 3D glasses.

9. The display apparatus as claimed in anyone of claim 1 to 8, wherein the control unit controls the different types of light sources to be simultaneously driven when displaying a 2D image.

10. 3D glasses, which operate in connection with a 3D display apparatus that displays a left-eye image and a right-eye image using a plurality of different types of light sources, the 3D glasses comprising:
a receiving unit which receives a sync signal from the 3D display apparatus;
a glasses unit which comprises a left-eye glass having a first-type color filter and a right-eye glass having a second-type color filter;
a driving unit which drives the glasses unit; and
a control unit which controls the driving unit in response to the sync signal;
wherein the first-type color filter and the second-type color filter correspond to the different types of light sources, respectively.

11. The 3D glasses as claimed in claim 10, wherein the different types of light sources comprise a plurality of LEDs using a QD fluorescent material and having different peak wavelengths, and
wherein the first-type and the second-type color filter are configured to respectively match with RGB peak wavelengths of the different types of light sources.

12. The 3D glasses as claimed in claim 10, wherein the different types of light sources include a plurality of LEDs having different wavelength bands that do not overlap, and the first-type and second-type color filter are configured to respectively match with wavelength bands of the different types of light sources.

13. The 3D glasses as claimed in claim 12, wherein the plurality of LEDs having the different non-overlapping wavelength bands comprise a first-type LED having at least two blue chips, and a second-type LED having at least one blue chip and at least one red chip.

14. A driving method of a display apparatus which comprises a display panel and a backlight unit which includes a plurality of different types of light sources and which is disposed on a rear surface of the display panel, the driving method comprising:
emitting light toward the display panel by the backlight unit; and
driving the backlight unit the different types of light sources to display the left-eye image and the right-eye image, respectively.

15. A driving method of 3D glasses which operate in connection with a 3D display apparatus that displays a left-eye image and a right-eye image using a plurality of different types of light sources, the method comprising:
receiving a sync signal from the 3D display apparatus; and
driving a glasses unit which comprises a left-eye glass having a first-type color filter and a right-eye glass having a second-type color filter;
wherein the first-type color filter and the second-type color filter correspond to the different types of light sources, respectively.
